# EUROPEAN PATENT SPECIFICATION

(11) **EP 3 196 660 B1**
(45) Date of publication and mention of the grant of the patent: **05.09.2018**
(21) Application number: 17151733.7
(22) Date of filing: 17.01.2017
(51) Int. Cl.: G01P 15/09, G01P 21/00

(54) **MEMS PIEZOELECTRIC ACCELEROMETER WITH BUILT-IN SELF TEST**
PIEZOELEKTRISCHER MEMS-BESCHLEUNIGUNGSMESSER MIT EINGEBAUTEM SELBSTTEST
ACCÉLÉROMÈTRE PIÉZOÉLECTRIQUE MEMS AVEC UN AUTOTEST INTÉGRÉ

(30) Priority: 19.01.2016 US 201615000838
(43) Date of publication of application: 26.07.2017
(73) Proprietor: Rosemount Aerospace Inc., Burnsville MN 55306-4898 (US)
(72) Inventor: ZHANG, Weibin, Burnsville, MN 55337 (US); HUYNH, Cuong Tho, Shakopee, MN 55379 (US); McTighe, James Joseph, Burnsville, MN 55306 (US)
(74) Representative: Dehns

(56) References cited:
- EP-A2- 0 523 732
- CN-A- 104 730 288
- US-A- 5 473 930
- US-A1- 2011 000 275
- L-P WANG ET AL: "Microelectromechanical systems (MEMS) accelerometers using lead zirconate titanate thick films", IEEE ELECTRON DEVICE LETTERS, IEEE SERVICE CENTER, NEW YORK, NY, US, vol. 23, no. 4, 1 April 2002 (2002-04-01), pages 182-184, XP011424566, ISSN: 0741-3106, DOI: 10.1109/55.992832

## Description

### BACKGROUND

Piezoelectric transducers are used to convert between mechanical deformations and electrical signals. Piezoelectric transducers can produce a voltage, a current, or a charge in response to changes in pressure, acceleration, temperature, strain, or force, etc. Such transducers are used to monitor processes or deformable members. Piezoelectric transducers can be used in the opposite fashion, producing mechanical movement in response to an actuating signal. Such piezoelectric transducers can be used to perform mechanical actuation of movable members. Micro sized piezoelectric transducers are used in miniature sized devices and systems to perform precise mechanical operations or to sense mechanical conditions.

For piezoelectric accelerometer applications, a built-in self-test capability can be helpful. For example, in aerospace application, the built-in test capability can permit the pilot to check if the accelerometer is in working condition before an airplane takes off. Piezoelectric transducers may have mechanical deformation/sense signal relations or excitation/response relations. Such relations may change over time and/or temperature etc. Built-in test capability can detect changes in the excitation/response relation of a piezoelectric transducer. Bulk-mode piezoelectric accelerometers typically require large actuation voltage to cause measurable deformations. Micro Electro Mechanical System (MEMS) piezoelectric accelerometers, however, can produce measureable mechanical deformations using relatively modest voltages. US 5473930 A describes an acceleration sensor with oppositely polarized piezoelectric plates.

### SUMMARY

An accelerometer includes a substrate having a proofmass and at least one coupling member. The coupling member(s) is configured to mechanically couple the accelerometer to a device to be tested. The accelerometer includes a first MEMS piezoelectric transducer mounted to one of the one coupling member(s) of the substrate. The first MEMS piezoelectric transducer is configured to deform the at least one coupling member in response to a first electrical signal received by the piezoelectric transducer. The accelerometer includes a second MEMS piezoelectric transducer mounted to one of the coupling member(s) of the substrate. The second MEMS piezoelectric transducer is configured to provide a second electrical signal in response to deformation of the at least one coupling member of the substrate. The accelerometer also includes a self-test module configured to generate the first electrical signal and to receive the second electrical signal. The self-test module is configured to compare the received second electrical signal to a reference signal and configured to generate a test result based upon the comparison. The first and second MEMS piezoelectric transducers are located on a same one of the at least one coupling member.

In some embodiments, an accelerometer includes a substrate having a proofmass and an elastically deformable coupling member. The accelerometer includes a first MEMS piezoelectric transducer configured to induce a mechanical deformation of the elastically deformable coupling member in response to an electrical excitation signal received by the first MEMS piezoelectric transducer. The accelerometer includes a second MEMS piezoelectric transducer electrically isolated from but mechanically coupled to the first piezo electric transducer via the elastically deformable coupling member. The second MEMS piezoelectric transducer is configured to generate an electrical response signal in response to mechanical deformation of the elastically deformable coupling member. The accelerometer also includes a self-test module configured to generate the electrical excitation signal and to receive the electrical response signal. The self-test module is further configured to generate a sensor test result based upon a comparison between the received electrical response signal and a reference signal. In some embodiments the electrical excitation signal is a first electrical excitation signal, and the second MEMS piezoelectric transducer is further configured to induce a mechanical deformation of the elastically deformable coupling member in response to a second electrical excitation signal received by the second MEMS piezoelectric transducer. In some embodiments the electrical response signal is a first electrical response signal, and the first MEMS piezoelectric transducer is further configured to generate a second electrical response signal in response to mechanical deformation of the elastically deformable coupling member. In some embodiments the sensor test result is a first sensor test result and the reference signal is a first reference signal, wherein the self-test module is further configured to generate the second electrical excitation signal and to receive the second electrical response signal, the self-test module further configured to generate a second sensor test result based upon a comparison between the received second electrical response signal and a second reference signal. In some embodiments the elastically deformable coupling member is configured to permit motion of the proofmass in a unidirectional manner. In some embodiments the accelerometer has an excitation/response relation that is substantially independent of frequency between a low-frequency limit and a high-frequency limit. In some embodiments the second MEMS piezoelectric transducer is adjacent to the first piezoelectric transducer.

### BRIEF DESCRIPTION OF THE DRAWINGS

FIG. 1A is a perspective view of an exemplary Accelerometer that has built-in self testing capability using actuating and sensing MEMS piezoelectric transducers that share coupling members.
FIG. IB is a perspective view of an exemplary Accelerometer that has built-in self testing capability using actuating and sensing MEMS piezoelectric transducers on a cylindrically symmetric coupling member.
FIG. 1C is a perspective view of an exemplary Accelerometer that has built-in self testing capability using actuating and sensing MEMS piezoelectric transducers on separate coupling members.
FIG. 2 is a block diagram of an exemplary Accelerometer system having a self-test module.
FIG. 3 is a flow chart of an exemplary method of self-testing an accelerometer having a coupled pair of MEMS piezoelectric transducers.

### DETAILED DESCRIPTION

Mechanical motion and/or vibration of a device can be measured using an accelerometer. An exemplary accelerometer may have a proofmass coupled to an elastically deformable coupling member. The elastically deformable coupling member may then couple the accelerometer to the device to be tested for vibration and/or mechanical motion. Vibration and/or mechanical motion of the device to which the accelerometer is coupled can be measured by measuring an amount of deformation of the elastically deformable coupling member. Using Micro Electro Mechanical System (MEMS) process technologies, thin-film piezoelectric transducers can be deposited on the elastically deformable coupling member. Such MEMS piezoelectric transducers can be used to actuate a mechanical deformation of the elastically deformable coupling member to which it is attached and/or to sense an amount of deformation of that same elastically deformable coupling member. By attaching two MEMS piezoelectric transducers - one to actuate deformation and one to sense deformation - to an accelerometer, built-in self testing of the accelerometer can be facilitated. Built-in self testing can be performed by using an actuating MEMS piezoelectric transducer to generate a dynamic movement of the proofmass using a low voltage actuation signal, while using a sensing MEMS piezoelectric transducer to electrically sense such movement.

Using MEMS processing techniques, thin film piezoelectric films such as AlN and/or PZT can be deposited using various deposition techniques such as sputtering, Chemical Vapor Deposition (CVD), and/or sol-gel coating. Such thin piezoelectric films can have thicknesses ranging from submicrons to tens of microns. These thin piezoelectric films and corresponding electrodes can be patterned to create piezoelectric transducers for mechanical actuation and/or electrical sensing of mechanical deformations.

Both actuating and sensing MEMS piezoelectric transducers can be mounted on a coupling member that can function as a spring of a spring-mass system. One or more coupling members may be used, each coupling member connected to the proofmass. These coupling members can be isolated from each other, semi-isolated from each other, or connected to one another. The actuating MEMS piezoelectric transducer and the sensing MEMS piezoelectric transducer can be located either on the same coupling member or on different coupling members. When located on different coupling members, an electric sensing signal might be better isolated from an electrical activation signal resulting in a sensing signal that is purely induced by the proofmass motion. MEMS piezoelectric transducers and their associated coupling member configurations can be distributed symmetrically around the proofmass to reduce cross-talk noise between actuating and sensing MEMS piezoelectric transducers.

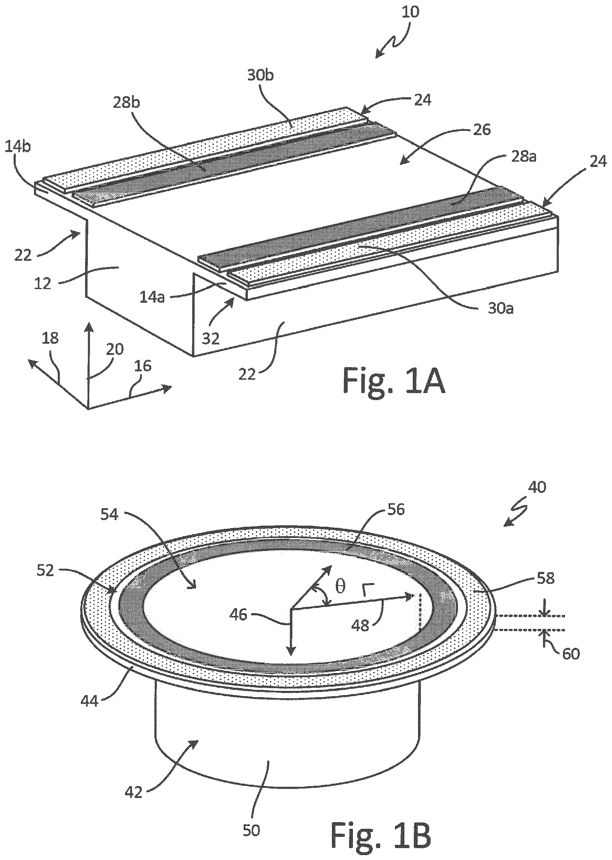

FIG. 1A is a perspective view of an exemplary Accelerometer that has built-in self testing capability using actuating and sensing MEMS piezoelectric transducers that share coupling members. In FIG. 1A, Accelerometer 10 includes proofmass 12 and coupling members 14a, 14b. In the depicted embodiment, proofmass 12 has an orthorhombic shape with sides directed along three orthonormal principle axes 16, 18, 20. Proofmass 12 has longitudinal axis 16, transverse axis 18 and vertical axis 20. Coupling members 14a, 14b transversely project from transverse sides 22 of proofmass 12. Top-side 24 of coupling members 14a, 14b and top side 26 of proofmass 12 are coplanar in the depicted embodiment. Piezoelectric transducers 28a, 30a are located on top-side 24 of coupling member 14a. Piezoelectric transducers 28b, 30b are located on top-side 24 of coupling member 14b.

Coupling members 14a and/or 14b are configured to mechanically couple Accelerometer 10 to a device to be tested, such as a fan blade of an aircraft engine. When the fan blade is accelerated, points of attachment of coupling members 14a, 14b are substantially identically accelerated. But proofmass, having inertia, may respond to such acceleration in a lagging manner. The difference in motion between the point of attachment of coupling members 14a, 14b and proofmass 12 may cause deformation of coupling members 14a, 14b therebetween, as coupling members 14a, 14b have vertical thickness dimension 32 that is relatively small. Thus the geometry of Accelerometer 10 can be configured to measure acceleration in either direction of vertical axis 20 or transverse axis 18. Coupling members 14a, 14b may behave as a spring, for example, and may have a spring coefficient that characterizes their deformations.

Piezoelectric transducers 28a, 28b, 30a, 30b may be either single purpose of dual purpose transducers. For example, for vertical axis 20 direction sensing and actuation, piezoelectric transducers 28a, 28b may be dedicated to producing mechanical deformation of coupling members 14a, 14b, respectively, in response to excitation signals received by piezoelectric transducers 28a, 28b. And piezoelectric transducers 30a, 30b may be dedicated to generating electrical response signals in response to the induced deformation of coupling members 14a, 14b, respectively. In some embodiments, piezoelectric transducers 28a, 28b and piezoelectric transducers 30a, 30b may have the opposite roles as described above.

For transverse axis 18 direction built-in testing, piezoelectric transducers 28a, 30b may be dedicated to producing mechanical deformation of coupling members 14a, 14b, respectively, in response to excitation signals received by piezoelectric transducers 28a, 30b. Piezoelectric transducers 28b, 30a may be dedicated to generating electrical response signals in response to the induced deformation of coupling members 14a, 14b, respectively. In some embodiments, piezoelectric transducers 28a, 30b and piezoelectric transducers 28b, 30a may have the opposite roles than those described above. And in some embodiments, transducers 28a, 28b, 30a, 30b can each be used at different times in both of the manners as described above.

FIG. 1B is a perspective view of an exemplary Accelerometer that has built-in self testing capability using actuating and sensing MEMS piezoelectric transducers on a cylindrically symmetric coupling member. In FIG. 1B, Accelerometer 40 includes proofmass 42 and coupling members 44. In the depicted embodiment, proofmass 42 is cylindrical having central axis 46 and radius 48. Coupling member 44 radially projects from cylinder wall 50 of proofmass 42. Top-side 52 of coupling members 44 and top side 54 of proofmass 12 are coplanar in the depicted embodiment. Piezoelectric transducers 56, 58 are located on top-side 52 of a coupling member 44. Coupling member 44 is configured to mechanically couple to a device to be tested.

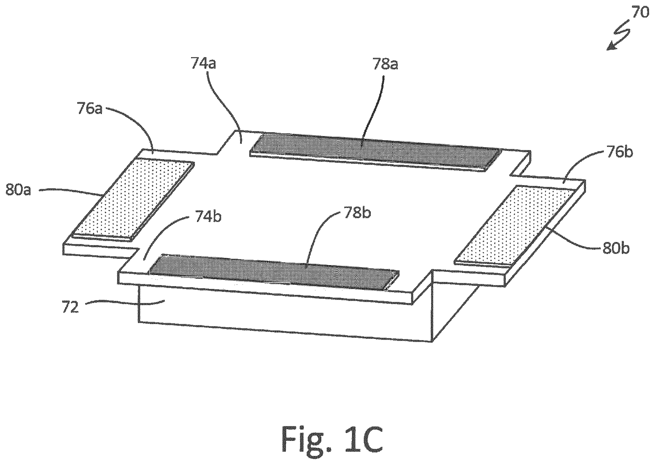

FIG. 1C is a perspective view of an exemplary Accelerometer that has built-in self testing capability using actuating and sensing MEMS piezoelectric transducers located on separate coupling members. In FIG. 1C, Accelerometer 70 includes proofmass 72 and coupling members 74a, 74b, 76a, 76b. Actuating MEMS piezoelectric transducers 78a, 78b are located on coupling member 74a, 74b. Sensing MEMS piezoelectric transducers 80a, 80b are located on coupling member 75a, 75b. In the depicted embodiment each coupling member 74a, 74b, 76a, 76b has only one MEMS piezoelectric transducer 78a, 78b, 80a, 80b, thereupon. Sensing MEMS piezoelectric transducers 80a, 80b are arranged on opposite coupling members 76a, 76b and actuating MEMS piezoelectric transducers 78a, 78b are similarly arranged on opposite coupling members 74a, 74b.

Piezoelectric transducers 80a, 80b, 78a, 78b may also be either single purpose or dual purpose transducers in a similar manner as described for depicted embodiment of FIG 1A. Accelerometer 70 can be configured to measure acceleration in the either direction of vertical axis 20 or transverse axes 18. Distributing actuating and sensing MEMS piezoelectric transducers on coupling members 74a, 74b, 76a, 76b may facilitate independent optimization of geometry design for both piezoelectric transducers 78a, 78b, 80a, 80b and coupling members 74a, 74b, 76a, 76b.

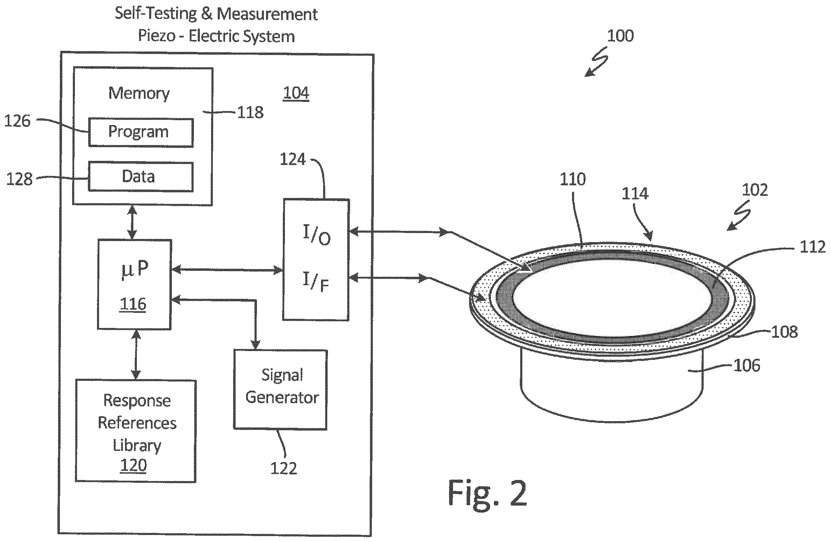

FIG. 2 is a block diagram of an exemplary accelerometer system having a self-test module. In FIG. 2, accelerometer system 100 includes accelerometer element 102 and self-testing and measurement system 104. Accelerometer element 102 includes proof mass 106, coupling member 108, first piezoelectric transducer 110, and second piezoelectric transducer 112. Piezoelectric element 110 is electrically isolated from piezoelectric element 112. In some embodiments, piezoelectric elements 110, 112 may share a common interconnect net, while otherwise maintaining electrical isolation from one another. For example, top surface 114 of accelerometer element 102 may be electrically coupled to a backside of both of piezoelectric transducers 110, 112, while a second electrical connection to each of piezoelectric transducers is electrically isolated from one another.

Self-testing and measurement system 104 includes microprocessor 116, memory 118, response reference library 120, signal generator 122 and input/output interface 124. Memory 118 includes program memory 126 and data memory 128. Microprocessor 116 is in bidirectional electrical communication with memory 118, reference library 120, input/output interface 124 and signal generator 122. Signal generator 122 is also in electrical communication with input/output interface 124. Input/output interface 124 is in electrical communication with accelerometer element 102.

Piezoelectric transducers 110, 112 are mechanically coupled to one another via coupling member 108. Coupling member 108 may also be used to couple accelerometer element 102 to a body to be monitored by accelerometer element 102. If coupling member 108 is deformed, both piezoelectric transducers 110, 112 may generate an electrical response signal. These electrical response signals may correlate one to another. In a test mode, self-testing and measurement system 104 may generate an excitation signal. The excitation signal may be output to a first one of piezoelectric transducers 110, 112. The first one of piezoelectric transducers 110, 112 may then deform in response to the received excitation signal.

Coupling member 108 may deform in response to the deformation of the first one of piezoelectric transducers 110, 112, due to an intimate mechanical connection therebetween. A second one of piezoelectric transducers 110, 112 may deform in response to the deformation of coupling member 108, due to an intimate mechanical connection therebetween. The second of piezoelectric transducers 110, 112 may then generate an electrical response signal in response to its own deformation. Self-testing and measurement system 104 then receives the electrical response signal generated by the second one of piezoelectric transducers 110, 112.

Self-testing and measurement system 104 may then retrieve a reference signal and compare the received electrical response signal with the retrieved reference signal. Self-testing and measurement system 104 may then generate a pass/fail flag in response to the comparison between the received electrical response signal with the retrieved reference signal. This testing operation can be repeated, using each of piezoelectric transducers 110, 112 in the opposite manner as described above.

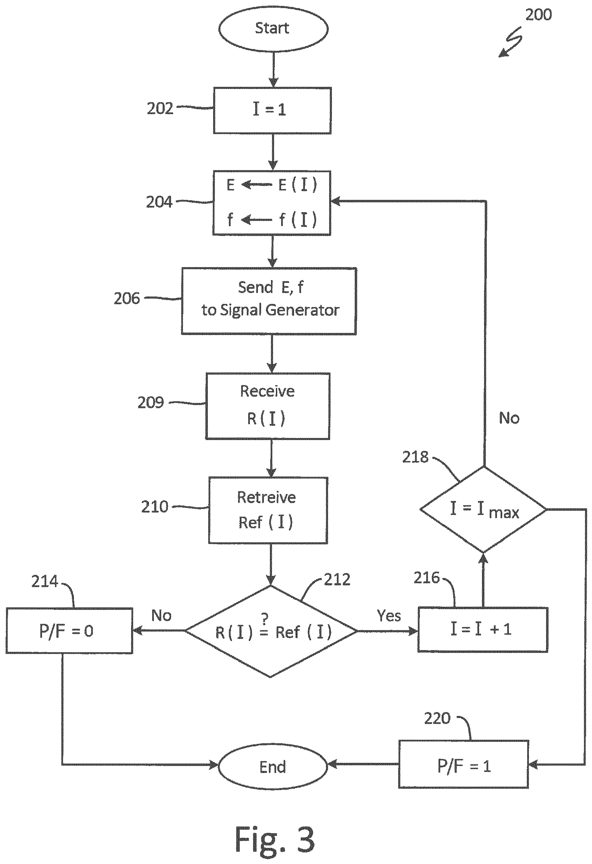

FIG. 3 is a flow chart of an exemplary method of self-testing an accelerometer having a coupled pair of piezoelectric transducers. In FIG. 3, method 200 is given from a perspective of microprocessor 116 of FIG. 2. Method 200 begins at step 202 with microprocessor 116 initializing index I to equal one. Then at step 204, microprocessor 116 retrieves amplitude E(I) and frequency f(I) of an excitation signal. Then at step 206, microprocessor 116 sends the retrieved amplitude E(I) and frequency f(I) to signal generator 122 (shown in FIG. 2). Then at step 208, microprocessor 116 receives response signal R(I) from accelerometer element 102 via input/output interface 124.

At step 210, microprocessor 116 retrieves reference signal REF(I) from reference signal library 120. Then at step 212, microprocessor compares received response signal R(I) with retrieved reference signal REF(I). If received response signal R(I) is not within predetermined limits of retrieved reference signal REF(I), then method 200 proceeds to step 214. At step 214, microprocessor sets pass/fail flag P/F to zero and the method ends. If, however, at step 212, received response signal R(I) is within predetermined limits of retrieved reference signal REF(I), then method 200 proceeds to step 216. At step 216, microprocessor 116 increments index I. Then at step 218, microprocessor compares index I with a maximum index I_{MAX}. If index I is equal to I_{MAX}, then method 200 proceeds to step 220. At step 22, microprocessor sets pass/fail flag P/F to one and the method ends. If, however, at step 218, index I is not equal to I_{MAX}, then method returns to step 204, at which step microprocessor 116 retrieves new amplitude E(I) and frequency f for use in generating a next excitation signal.

In some embodiments, an excitation/response relation will be substantially independent of frequency between a minimum frequency and a maximum frequency. In some embodiments the maximum frequency will be, for example, about 10 kHz, 100 kHz, or about 1MHz.

The following are non-exclusive descriptions of possible embodiments of the present invention.

An accelerometer includes a substrate having a proofmass and at least one coupling member. The at least one coupling member is configured to mechanically couple the accelerometer to a device to be tested. The accelerometer includes a first MEMS piezoelectric transducer mounted to one of the at least one coupling member of the substrate and configured to deform the at least one coupling member in response to a first electrical signal received by the piezoelectric transducer. The accelerometer includes a second MEMS piezoelectric transducer mounted to one of the at least one coupling member of the substrate and configured to provide a second electrical signal in response to deformation of the at least one coupling member of the substrate. The accelerometer also includes a self-test module configured to generate the first electrical signal and to receive the second electrical signal. The self-test module is configured to compare the received second electrical signal to a reference signal and configured to generate a test result based upon the comparison.

The accelerometer of the preceding paragraph can optionally include, additionally and/or alternatively, any one or more of the following features, configurations and/or additional components: i) a third MEMS piezoelectric transducer mounted to one of the at least one coupling member of the substrate and configured to deform the at least one coupling member in response to a first electrical signal received by the piezoelectric transducer; and ii) a fourth MEMS piezoelectric transducer mounted to one of the at least one coupling member of the substrate and configured to provide a second electrical signal in response to deformation of the at least one coupling member of the substrate.

A further embodiment of the foregoing accelerometer, wherein the proofmass of the substrate may be substantially cylindrical, and the at least one coupling member of the substrate may be formed as a single annular coupling member projecting radially outward from the proofmass of the substrate. A further embodiment of any of the foregoing accelerometers, wherein the first and second MEMS piezoelectric transducers may be substantially circular. A further embodiment of any of the foregoing accelerometers, wherein the at least one coupling member of the substrate may include two coupling members. The first MEMS piezoelectric transducer may be located on a first one of the two coupling members. The second MEMS piezoelectric transducer may be located on a second one of the two coupling members.

A further embodiment of any of the foregoing accelerometers, wherein the first and second MEMS piezoelectric transducers may be located on a same one of the at least on coupling member. A further embodiment of any of the foregoing accelerometers, wherein the first and second MEMS piezoelectric transducers may be located on a first one and second one of the at least one coupling member, respectively. A further embodiment of any of the foregoing accelerometers, wherein the proofmass of the substrate may have a substantially orthorhombic shape, and the at least one coupling member of the substrate may include two coupling members projecting from opposite sides of the orthorhombic shaped proofmass.

A further embodiment of any of the foregoing accelerometers, wherein the at least one coupling member of the substrate may be configured to permit motion of the proofmass in a unidirectional manner. A further embodiment of any of the foregoing accelerometers, wherein the accelerometer may have an excitation/response relation that is substantially independent of frequency between a low-frequency limit and a high-frequency limit. A further embodiment of any of the foregoing accelerometers, wherein the first and second MEMS piezoelectric transducers comprise aluminum nitride. A further embodiment of any of the foregoing accelerometers, wherein the second MEMS piezoelectric transducer may be adjacent to the first piezoelectric transducer.

In some embodiments, an accelerometer includes substrate having a proofmass and an elastically deformable coupling member. The accelerometer includes a first MEMS piezoelectric transducer configured to induce a mechanical deformation of the elastically deformable coupling member in response to an electrical excitation signal received by the first MEMS piezoelectric transducer. The accelerometer includes a second MEMS piezoelectric transducer electrically isolated from but mechanically coupled to the first piezo electric transducer via the elastically deformable coupling member. The second MEMS piezoelectric transducer is configured to generate an electrical response signal in response to mechanical deformation of the elastically deformable coupling member. The accelerometer also includes a self-test module configured to generate the electrical excitation signal and to receive the electrical response signal. The self-test module is further configured to generate a sensor test result based upon a comparison between the received electrical response signal and a reference signal.

A further embodiment of the foregoing accelerometer, wherein the electrical excitation signal is a first electrical excitation signal, and the second MEMS piezoelectric transducer may be further configured to induce a mechanical deformation of the elastically deformable coupling member in response to a second electrical excitation signal received by the second MEMS piezoelectric transducer. A further embodiment of any of the foregoing accelerometers, wherein the electrical response signal is a first electrical response signal, and the first MEMS piezoelectric transducer is further configured to generate a second electrical response signal in response to mechanical deformation of the elastically deformable coupling member.

A further embodiment of any of the foregoing accelerometers, wherein the sensor test result is a first sensor test result and the reference signal is a first reference signal. The self-test module may be further configured to generate the second electrical excitation signal and to receive the second electrical response signal. The self-test module may be further configured to generate a second sensor test result based upon a comparison between the received second electrical response signal and a second reference signal.

A further embodiment of any of the foregoing accelerometers, wherein the elastically deformable coupling member may be configured to permit motion of the proofmass in a unidirectional manner. A further embodiment of any of the foregoing accelerometers, wherein the accelerometer may have an excitation/response relation that is substantially independent of frequency between a low-frequency limit and a high-frequency limit. A further embodiment of any of the foregoing accelerometers, wherein the second MEMS piezoelectric transducer may be adjacent to the first piezoelectric transducer.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An accelerometer (10, 40, 70) comprising:
a substrate having a proofmass (12, 42, 72, 106) and at least one coupling member (14a, 14b, 44), the at least one coupling member (14a, 14b) configured to mechanically couple the accelerometer (10) to a device to be tested;
a first MEMS piezoelectric transducer (28a, 28b) mounted to one of the at least one coupling member of the substrate and configured to deform the at least one coupling member in response to a first electrical signal received by the piezoelectric transducer;
a second MEMS piezoelectric transducer (30a, 30b) mounted to one of the at least one coupling member of the substrate and configured to provide a second electrical signal in response to deformation of the at least one coupling member of the substrate; and **characterized by** comprising a self-test module (104) configured to generate the first electrical signal and to receive the second electrical signal, the self-test module configured to compare the received second electrical signal to a reference signal and configured to generate a test result based upon the comparison, and
wherein the first and second MEMS piezoelectric transducers (28a, 28b, 30a, 30b) are located on a same one of the at least on coupling member (14a, 14b, 44).

2. The accelerometer of claim 1, wherein the proofmass (12, 42, 72, 106) of the substrate is substantially cylindrical, and the at least one coupling member of the substrate is formed as a single annular coupling member projecting radially outward from the proofmass (12, 42, 72, 106) of the substrate.

3. The accelerometer of claim 2, wherein the first and second MEMS piezoelectric transducers (28a, 28b, 30a, 30b) are substantially circular.

4. The accelerometer of any preceding claim, wherein the at least one coupling member (14a, 14b, 44) of the substrate comprises two coupling members.

5. The accelerometer of any preceding claim, wherein the proofmass (12, 42, 72, 106) of the substrate has a substantially orthorhombic shape, and the at least one coupling member of the substrate comprises two coupling members projecting from opposite sides of the orthorhombic shaped proofmass.

6. The accelerometer (10, 40, 70) of claim 5, further comprising:
a third MEMS piezoelectric transducer mounted to one of the at least one coupling member of the substrate and configured to deform the at least one coupling member in response to a first electrical signal received by the piezoelectric transducer; and
a fourth MEMS piezoelectric transducer mounted to one of the at least one coupling member of the substrate and configured to provide a second electrical signal in response to deformation of the at least one coupling member of the substrate.

7. The accelerometer of any preceding claim, wherein the at least one coupling member of the substrate is configured to permit motion of the proofmass in a unidirectional manner.

8. The accelerometer of any preceding claim, wherein the accelerometer has an excitation/response relation that is substantially independent of frequency between a low-frequency limit and a high-frequency limit.

9. The accelerometer of any preceding claim, wherein the first and second MEMS piezoelectric transducers (28a, 28b, 30a, 30b) comprise aluminum nitride.

10. The accelerometer of any preceding claim, wherein the substrate is a unitary body.

11. The accelerometer (10, 40, 70) of any preceding claim, wherein the second MEMS piezoelectric transducer is adjacent to the first piezoelectric transducer.

## Patentansprüche

1. Beschleunigungsmesser (10, 40, 70), umfassend:
ein Substrat, das eine seismische Masse (12, 42, 72, 106) und mindestens ein Kupplungsglied (14a, 14b, 44) aufweist, wobei das mindestens eine Kupplungsglied (14a, 14b) konfiguriert ist, um den Beschleunigungsmesser (10) mechanisch an eine Vorrichtung zu kuppeln, die zu testen ist;
einen ersten piezoelektrischen MEMS-Wandler (28a, 28b), der an einem des mindestens einen Kupplungsglieds des Substrats befestigt ist und konfiguriert ist, um das mindestens eine Kupplungsglied als Reaktion auf ein erstes elektrisches Signal, das vom piezoelektrischen Wandler empfangen wurde, zu verformen;
einen zweiten piezoelektrischen MEMS-Wandler (30a, 30b), der an einem des mindestens einen Kupplungsgliedes des Substrats befestigt ist und konfiguriert ist, um ein zweites elektrisches Signal als Reaktion auf die Verformung des mindestens einen Kupplungsglieds des Substrats bereitzustellen; und **dadurch gekennzeichnet, dass** er
ein Selbsttestmodul (104) umfasst, das konfiguriert ist, um das erste elektrische Signal zu erzeugen und um das zweite elektrische Signal zu empfangen, wobei das Selbsttestmodul konfiguriert ist, um das empfangene zweite elektrische Signal mit einem Bezugssignal zu vergleichen, und konfiguriert ist, um ein Testergebnis basierend auf dem Vergleich zu erzeugen, und
wobei der erste und der zweite piezoelektrische MEMS-Wandler (28a, 28b, 30a, 30b) auf demselben des mindestens einen Kupplungsglieds (14a, 14b, 44) angeordnet sind.

2. Beschleunigungsmesser nach Anspruch 1, wobei die seismische Masse (12, 42, 72, 106) des Substrats im Wesentlichen zylindrisch ist und das mindestens eine Kupplungsglied des Substrats als einzelnes ringförmiges Kupplungsglied ausgebildet ist, das von der seismischen Masse (12, 42, 72, 106) des Substrats radial nach außen ragt.

3. Beschleunigungsmesser nach Anspruch 2, wobei der erste und der zweite piezoelektrische MEMS-Wandler (28a, 28b, 30a, 30b) im Wesentlichen kreisförmig sind.

4. Beschleunigungsmesser nach einem der vorstehenden Ansprüche, wobei das mindestens eine Kupplungsglied (14a, 14b, 44) des Substrats zwei Kupplungsglieder umfasst.

5. Beschleunigungsmesser nach einem der vorstehenden Ansprüche, wobei die seismische Masse (12, 42, 72, 106) des Substrats eine im Wesentlichen orthorhombische Form aufweist und das mindestens eine Kupplungsglied des Substrats zwei Kupplungsglieder umfasst, die aus gegenüberliegenden Seiten der orthorhombisch geformten seismischen Masse ragen.

6. Beschleunigungsmesser (10, 40, 70) nach Anspruch 5, weiter Folgendes umfassend:
einen dritten piezoelektrischen MEMS-Wandler, der an einem des mindestens einen Kupplungsglieds des Substrats befestigt ist und konfiguriert ist, um das mindestens eine Kupplungsglied als Reaktion auf ein erstes elektrisches Signal, das vom piezoelektrischen Wandler empfangen wurde, zu verformen; und
einen vierten piezoelektrischen MEMS-Wandler, der an einem des mindestens einen Kupplungsglieds des Substrats befestigt ist und konfiguriert ist, um ein zweites elektrisches Signal als Reaktion auf die Verformung des mindestens einen Kupplungsglieds des Substrats bereitzustellen.

7. Beschleunigungsmesser nach einem der vorstehenden Ansprüche, wobei das mindestens eine Kupplungsglied des Substrats konfiguriert ist, um die Bewegung der seismischen Masse in einer Richtung zuzulassen.

8. Beschleunigungsmesser nach einem der vorstehenden Ansprüche, wobei der Beschleunigungsmesser ein Verhältnis von Anregung/Reaktion aufweist, das im Wesentlichen von der Frequenz zwischen einer unteren Grenzfrequenz und einer oberen Grenzfrequenz unabhängig ist.

9. Beschleunigungsmesser nach einem der vorstehenden Ansprüche, wobei der erste und der zweite piezoelektrische MEMS-Wandler (28a, 28b, 30a, 30b) ein Aluminiumnitrid umfassen.

10. Beschleunigungsmesser nach einem der vorstehenden Ansprüche, wobei das Substrat ein einheitlicher Körper ist.

11. Beschleunigungsmesser (10, 40, 70) nach einem der vorstehenden Ansprüche, wobei der zweite piezoelektrische MEMS-Wandler an den ersten piezoelektrischen Wandler angrenzt.

## Revendications

1. Accéléromètre (10, 40, 70) comprenant :
un substrat ayant une masse étalon (12, 42, 72, 106) et au moins un élément de couplage (14a, 14b, 44), l'au moins un élément de couplage (14a, 14b) configuré pour coupler mécaniquement l'accéléromètre (10) à un dispositif à tester ;
un premier transducteur piézoélectrique MEMS (28a, 28b) monté sur un parmi l'au moins un élément de couplage du substrat et configuré pour déformer l'au moins un élément de couplage en réponse à un premier signal électrique reçu par le transducteur piézoélectrique ;
un second transducteur piézoélectrique MEMS (30a, 30b) monté sur un parmi l'au moins un élément de couplage du substrat et configuré pour fournir un second signal électrique en réponse à la déformation de l'au moins un élément de couplage du substrat ; et **caractérisé en ce qu'**il comprend
un module d'autotest (104) configuré pour générer le premier signal électrique et pour recevoir le second signal électrique, le module d'autotest configuré pour comparer le second signal électrique reçu à un signal de référence et configuré pour générer un résultat de test basé sur la comparaison, et
dans lequel les premier et second transducteurs piézoélectriques MEMS (28a, 28b, 30a, 30b) sont situés sur un même élément de couplage de l'au moins un élément de couplage (14a, 14b, 44).

2. Accéléromètre selon la revendication 1, dans lequel la masse étalon (12, 42, 72, 106) du substrat est sensiblement cylindrique, et l'au moins un élément de couplage du substrat est formé comme un unique élément de couplage annulaire faisant saillie radialement vers l'extérieur depuis la masse étalon (12, 42, 72, 106) du substrat.

3. Accéléromètre selon la revendication 2, dans lequel les premier et second transducteurs piézoélectriques MEMS (28a, 28b, 30a, 30b) sont sensiblement circulaires.

4. Accéléromètre selon une quelconque revendication précédente, dans lequel l'au moins un élément de couplage (14a, 14b, 44) du substrat comprend deux éléments de couplage.

5. Accéléromètre selon une quelconque revendication précédente, dans lequel la masse étalon (12, 42, 72, 106) du substrat a une forme sensiblement orthorhombique, et l'au moins un élément de couplage du substrat comprend deux éléments de couplage faisant saillie depuis des côtés opposés de la masse étalon de forme orthorhombique.

6. Accéléromètre (10, 40, 70) selon la revendication 5, comprenant en outre :
un troisième transducteur piézoélectrique MEMS monté sur un parmi l'au moins un élément de couplage du substrat et configuré pour déformer l'au moins un élément de couplage en réponse à un premier signal électrique reçu par le transducteur piézoélectrique ; et
un quatrième transducteur piézoélectrique MEMS monté sur un parmi l'au moins un élément de couplage du substrat et configuré pour fournir un second signal électrique en réponse à la déformation de l'au moins un élément de couplage du substrat.

7. Accéléromètre selon une quelconque revendication précédente, dans lequel l'au moins un élément de couplage du substrat est configuré pour permettre le mouvement de la masse étalon de manière unidirectionnelle.

8. Accéléromètre selon une quelconque revendication précédente, dans lequel l'accéléromètre a un rapport excitation/réponse qui est sensiblement indépendant de la fréquence entre un seuil basse fréquence et un seuil haute fréquence.

9. Accéléromètre selon une quelconque revendication précédente, dans lequel les premier et second transducteurs piézoélectriques MEMS (28a, 28b, 30a, 30b) comprennent du nitrure d'aluminium.

10. Accéléromètre selon une quelconque revendication précédente, dans lequel le substrat est un corps unitaire.

11. Accéléromètre (10, 40, 70) selon une quelconque revendication précédente, dans lequel le second transducteur piézoélectrique MEMS est adjacent au premier transducteur piézoélectrique.
